# FASCICULE DE BREVET EUROPEEN

(11) **EP 3 712 798 B1**
(45) Date de publication et mention de la délivrance du brevet: **07.07.2021**
(21) Numéro de dépôt: 20161799.0
(22) Date de dépôt: 09.03.2020
(51) Int. Cl.: G06F 21/62, G06F 21/64, G06F 21/60, G06Q 50/00, H04L 9/32, G06Q 10/06, G06Q 10/08, G06Q 10/00, G06Q 50/28, G06Q 90/00

(54) **REGISTRES DISTRIBUES POUR LA GESTION DU CYCLE DE VIE DE DONNEES EN AERONAUTIQUE**
VERTEILTE VERZEICHNISSE FÜR DIE STEUERUNG DES LEBENSZYKLUS VON DATEN IN DER LUFTFAHRT
DISTRIBUTED REGISTERS FOR MANAGING THE LIFE CYCLE OF DATA IN AERONAUTICS

(30) Priorité: 21.03.2019 FR 1902921
(43) Date de publication de la demande: 23.09.2020
(73) Titulaire: Thales, 92400 Courbevoie (FR)
(72) Inventeur: COULMEAU, François, 31100 TOULOUSE (FR); MARTINEZ, Dorian, 31100 TOULOUSE (FR); PABIA, Guillaume, 33700 MERIGNAC (FR)
(74) Mandataire: Marks & Clerk France

(56) Documents cités:
- BROUSMICHE KEI LEO ET AL: "Digitizing, Securing and Sharing Vehicles Life-cycle over a Consortium Blockchain: Lessons Learned", 2018 9TH IFIP INTERNATIONAL CONFERENCE ON NEW TECHNOLOGIES, MOBILITY AND SECURITY (NTMS), IEEE, 26 février 2018 (2018-02-26), pages 1-5, XP033342893, DOI: 10.1109/NTMS.2018.8328733
- LEO BROUSMICHE KEI ET AL: "Hybrid Cryptographic Protocol for Secure Vehicle Data Sharing Over a Consortium Blockchain", 2018 IEEE INTERNATIONAL CONFERENCE ON INTERNET OF THINGS (ITHINGS) AND IEEE GREEN COMPUTING AND COMMUNICATIONS (GREENCOM) AND IEEE CYBER, PHYSICAL AND SOCIAL COMPUTING (CPSCOM) AND IEEE SMART DATA (SMARTDATA), IEEE, 30 juillet 2018 (2018-07-30), pages 1281-1286, XP033556303, DOI: 10.1109/CYBERMATICS_2018.2018.00223
- AZARIA ASAPH ET AL: "MedRec: Using Blockchain for Medical Data Access and Permission Management", 2016 2ND INTERNATIONAL CONFERENCE ON OPEN AND BIG DATA (OBD), IEEE, 22 août 2016 (2016-08-22), pages 25-30, XP032969608, DOI: 10.1109/OBD.2016.11
- CHRISTIAN WIRTH ET AL: "Privacy by BlockChain Design: A BlockChain-enabled GDPR-compliant Approach for Handling Personal Data", ACM CLASSIFICATION KEYWORDS, 7 juin 2018 (2018-06-07), XP055666076, ISSN: 2510-2591, DOI: 10.18420/blockchain2018_03

## Description

### Domaine de l'invention

Le document concerne le domaine technique général du traitement de l'information. En particulier, le document décrit des systèmes et des procédés pour la gestion du cycle de vie des donnés en aéronautique, en utilisant notamment des bases de données distribuées.

### Technique antérieure

Dans l'écosystème complexe de l'aéronautique, parmi de très nombreux problèmes techniques, il est important de bien gérer le cycle de vie des données aéronautiques.

A ce jour, les données techniques s'amoncellent «sans terme », i.e. sont souvent conservées plus longtemps que nécessaire. Des données deviennent inutiles (en vue de certaines utilisations), deviennent obsolètes (inutiles quels que soient les usages) ou bien encore doivent être contractuellement supprimées après une date butoir (par exemple les données personnelles suivant le règlement européen de RGPD).

Certaines technologies, notamment les *chaînes de blocs* (*« blockchain » en anglais*) *ou registres distribués* (*« distributed ledger » en anglais*)*,* si elles sont adaptées de manière appropriée, peuvent redéfinir la gestion de ces données.

Les calculateurs embarqués dans un aéronef consomment et produisent une quantité de données extrêmement importante. La plupart des échanges restent internes à l'aéronef, et servent au fonctionnement global de l'aéronef. D'autres données sont extraites et stockées ou transmises en ligne, pour diverses applications (boîte noire etc). D'autres données, issues des calculateurs du « monde ouvert » ou de la « cabine » (passagers, fret) sont également utilisées et échangées sur des réseaux, entre le sol et le bord et stockées à des fins administratives et/ou commerciales et/ou légales. Dans une optique d'optimisation du vol (économies, environnement) et d'amélioration continue de la performance des appareils et des trajectoires sol et bord (maintenance prédictive, adaptation du vol ...), d'autres données issues de divers calculateurs commencent à transiter sur des réseaux, dans des nuages, afin d'être exploitées par des technologies Big Data / Intelligence artificielle.

Ces données sont actuellement détenues et gérées par une multitude d'acteurs, allant de la compagnie aérienne aux constructeurs d'aéronefs, en passant par les fournisseurs de calculateurs sol et bord, les centres de contrôle aérien, les autorités nationales et internationales liées au transport aérien à la sécurité, ou aux frontières. Chacune de ces entités doit gérer le cycle de vie des données : obsolescence, usage devenu sans valeur, vie privée, etc et ce en conformité avec les textes internationaux.

Or, parallèlement, la concentration des données par quelques acteurs (intermédiaires) est jugée néfaste car elle ne permet pas un traitement égalitaire entre les fournisseurs et utilisateurs, les uns pouvant être les autres d'ailleurs et introduit des « modes communs » de faiblesses qu'elles soient non intentionnelles (pannes) ou intentionnelles (attaques cyber).

Des technologies de désintermédiation commencent à voir le jour, notamment au travers des chaînes de blocs, les technologies sous-jacentes de chaînes de blocs ont un caractère « immutable », et horodatent les données sans limite de temps, afin de garantir l'historique sûr et authentique des informations qui ont été placées à un moment donné. Des adaptations substantielles restent donc nécessaires pour adapter ces briques technologiques aux spécificités de l'aéronautique.

En matière de *chaînes de blocs* (que l'on peut également trouver sous la terminologie de DLT acronyme de « *Distributed Ledger Technology* ») appliquées au contexte spécifique de l'aéronautique, tout reste à faire. Les publications autour de la *blockchain* sont presque exclusivement en anglais et généralement orientées vers Bitcoin et les applications financières. La littérature brevet française retourne fin 2018 seulement deux publications FR3062499 et FR3063406, lesquelles sont intéressantes mais ne sont pas pertinentes au regard des problèmes techniques posés. Plus généralement, la gestion du « droit à l'oubli » imposée dans certaines directives Européennes suscite peu de réponses de nature technique.

Des procédés publiés en matière de cryptographie (notamment de « *time-lapse cryptography* ») ne permettent pas de gérer l'obsolescence des données de manière satisfaisante. De même les mécanismes de DRM (« *Digital Rights Management* » et leurs mesures techniques de protection protègent contre la copie. Certains mécanismes de DRM dits « chrono dégradables » utilisés pour les livres électroniques ne peuvent pas être utilisés, notamment en raison du fait que les données de cycle de vie sont intriquées au fichier du livre électronique et ne peuvent pas être utilisés dans une chaine de blocs, laquelle interdit tout modification ultérieure des données inscrites dans les blocs.

BROUSMICHE KEI LEO ET AL: "Digitizing, Securing and Sharing Vehicles Life-cycle over a Consortium Blockchain: Lessons Learned", 2018 9TH IFIP INTERNATIONAL CONFERENCE ON NEW TECHNOLOGIES, MOBILITY AND SECURITY (NTMS), IEEE, 26 février 2018 (2018-02-26), pages 1-5, XP033342893, DOI: 10.1109/NTMS.2018.8328733 décrit la gestion de données automobiles dans une chaîne de blocs.

### Résumé de l'invention

Le document décrit des systèmes et des procédés mis en œuvre par ordinateur pour la gestion du cycle de vie de données aéronautiques stockées dans une chaine de blocs, comprenant les étapes consistant à recevoir ou émettre des données aéronautiques, chiffrer et/ou déchiffrer ces données par l'intermédiaire d'un contrat intelligent. L'usage de plusieurs chaines de blocs est décrit, ainsi que les faits et règles de gestion du cycle de vie des données (e.g. obsolescence programmée, indicateur de qualité fonction du temps, etc). Des développements décrivent notamment des aspects transactionnels ; l'emploi de services d'oracle, de méthodes de chiffrement asymétrique, homomorphe, post-quantique ; l'utilisation de fonctions de hachage de type caméléon, de manière à manipuler des chaines de blocs au moins partiellement éditables, et des techniques d'apprentissage automatique. Des aspects de logiciels et de systèmes sont décrits.

Avantageusement, les modes de réalisation de l'invention permettent un mécanisme double : d'une part un stockage des blocs produits dans une chaîne de blocs, par exemple avec chiffrement, et d'autre part un mécanisme de gestion de la mise à disposition et la consommation de données, qui peut notamment prendre en contre des paramètres comme la durée d'utilisation ou la date de fin d'utilisation des données.

Dans un mode de réalisation, une ou plusieurs chaînes de blocs sont utilisées pour stocker et partager les données et/ou des métadonnées (e.g. horodatage, intégrité, validation par consensus, etc). La gestion du cycle de vie peut être gérée (ou permise ou contrôlée) par un ou plusieurs contrats intelligents (e.g. accès aux données par les utilisateurs, gestion des droits, etc.).

En avionique, l'application de technologies d'Intelligence Artificielle ou Augmentée (« IA , essentiellement d'apprentissage automatique) sur des données « Big data » (connectivité entre les aéronefs et/ou le sol) lesquelles sont stockées par des chaines de blocs et/ou manipulées par des logiciels ou « contrats intelligents » permet des utilisations avantageuses e.g. amélioration de la maintenance par analyse d'une pluralité de sources au fil du temps ; émergence de services à valeur ajoutée pour les opérations aériennes e.g. estimation des retards, des surconsommations de carburant, optimisation des trajectoires, anticipation des flux, de la météo, etc ; amélioration de la sécurité et/ ou de la sûreté des vols, par exemple par analyse des flux et par la détection anticipée d'anomalies latentes ou difficilement prédictibles a priori ; amélioration de l'expérience passager par fourniture de biens et services ciblés ; amélioration de la gestion de mission lorsque de nombreux aéronefs sont engagés, par exemple des drones, etc.

Dans le cadre de l'invention, des données aéronautiques nouvelles, complémentaires, additionnelles, récentes, ou autrement enrichies peuvent être manipulées. En particulier l'obsolescence des données peut être finement contrôlée.

Avantageusement, les modes de réalisation de l'invention permettent de contrôler la « qualité » des données (e.g. date de début de validité, date de fin de validité ou expiration, intervalles temporels de validité, obsolescence binaire ou quantifiée ou discrétisée, scoring, etc)

En intégrant d'une manière spécifique (i.e. appropriée eu égard aux problématiques métiers de l'aéronautique), les technologies relatives à la gestion du cycle de vie des données aux chaînes de blocs et aux contrats intelligents, les procédés et systèmes selon l'invention permettent *in fine* d'améliorer la sûreté aéronautique. Cette sûreté est fondamentale dans cette industrie. Les architectures aéronautiques existantes sont très fermées (il existe peu de liens existant entre systèmes, du fait de crainte de corruptions de données, d'attaques, de risques systémiques, etc) ; la solution proposée peut améliorer significativement la gestion technique de données inter-systèmes, en augmentant les surfaces d'analyse (quantité de données) mais surtout la qualité des analyses conduites (avec des données, dont la « qualité » e.g. l'obsolescence est maitrisée, i.e. il est connu qu'elles ne sont pas du bruit).

### Description des figures

D'autres caractéristiques et avantages de l'invention apparaîtront à l'aide de la description qui suit et des figures des dessins annexés dans lesquels:
[fig.1] illustre le fonctionnement d'une chaîne de blocs;
[fig.2] schématise le fonctionnement de l'invention;
[fig.3] illustre un mode de réalisation de l'invention.

### Description détaillée de l'invention

### Données manipulées par l'invention

Les calculateurs embarqués dans un aéronef consomment et produisent une quantité de données extrêmement importante. La plupart des échanges restent internes à l'aéronef, et servent au fonctionnement global de l'aéronef.
a. Certaines données sont extraites et stockées ou transmises en ligne, pour diverses applications :
   « DFDR - Digital Flight Data Recorder » : c'est la fameuse boîte noire de l'appareil. Des données issues de plusieurs calculateurs y sont agrégées pour reconstituer un historique d'incident ou d'accident. Les utilisateurs de ces données sont des autorités en général étatiques de suivi des incidents/ accidents (en France le « BEA » - Bureau Enquête Accidents »). La fourniture de données pour nourrir le DFDR résulte d'une obligation légale. Le jeu de données est très réduit pour des questions de stockage.
b. « ECM - Engine Condition Monitoring » : les moteurs de l'aéronef sont très complexes, nécessitent des réglages très fins pour les optimiser, et une surveillance particulière pour pronostiquer les anomalies (maintenance prédictive). Pour ces raisons, les fournisseurs de moteurs (« motoristes ») installent soit des « EMU - Engine Monitoring Unit » pour concentrer et stocker des informations moteurs, et éventuellement les transmettre au sol par liaison de données numérique, afin de les analyser. Ces données peuvent rapidement dépasser le Go (Giga Octet) par vol. Ces données ne sont pas transmises à des tiers et servent au motoriste ou aux équipes de maintenance.
c. « AOC - ATC Datalink » : des données opérationnelles peuvent être envoyées par les calculateurs de communication numérique de l'aéronef (« CMU - Communication Management Unit ») à destination des compagnies aériennes (AOC - Airline Operation Communication ; AAC - Airline Administrative Communication) ou à destination des autorités de contrôle du ciel aérien (ATC - Air Traffic Control). Ces données sont limitées en taille, concernent la position de l'aéronef, sa trajectoire, mais aussi des conditions environnementales issues de capteurs embarqués. La liste des données est formalisée dans des normes internationales (AEEC ARINC702 par exemple pour les données AOC, RTCA DO212/219 pour des données ATC). La fourniture de données résulte soit d'un cadre légal (ATC) ou contractuel entre la compagnie d'une part et le fournisseur de CMU ou le constructeur d'autre part.

D'autres données, issues des calculateurs du « monde ouvert » ou de la « cabine » (passagers, fret) sont également utilisées et échangées sur des réseaux, entre le sol et le bord et stockées à des fins administratives et/ou commerciales et/ou légales :
a. Liste des passagers de l'aéronef comprenant des données personnelles (identité, nationalité, âge, voire religion, régime alimentaire, état de santé, poids ...), liste des bagages (type, poids, bagages spéciaux).
b. Identité des personnels de bord (équipage navigant (pilote, copilote), équipage commercial (hôtesses, stewards), à des fin administratives telles que la gestion de la paie, les temps de repos, les accès aux aéroports et aux hôtels à l'international ...
c. Des données d'opérateurs sol qui entretiennent l'aéronef (opérateurs de maintenance, gestionnaires de *catering,* personnels de sécurité, personnels de nettoyage ...)

Dans une optique d'optimisation du vol (économies, environnement) et d'amélioration continue de la performance des appareils et des trajectoires sol et bord (maintenance prédictive, adaptation du vol ...), d'autres données issues de divers calculateurs commencent à transiter sur des réseaux, dans des nuages, afin d'être exploitées par des technologies Big Data / Intelligence artificielle :
a. Données de trajectoires sol et bord prédites et/ou réalisées
b. Données de positions des calculateurs en temps réel au cours du vol
c. Données brutes dites de « santé » des calculateurs, afin d'améliorer la maintenance par analyse d'une pluralité de sources au fil du temps
d. Données brutes de calculateurs afin de détecter des failles et attaques de cyber sécurité
e. Données cabines afin d'améliorer l'expérience passagers par fourniture de biens et services ciblés

### Gestion du cycle de vie des données

Le *cycle de vie* de données (ou d'un document) désigne une ou plusieurs des étapes comprenant l'étape de création ou de capture des données, l'étape de validation (plusieurs itérations possibles), l'étape d'utilisation (e.g. modalités de diffusion et de publications, etc.), l'étape de fin de vie (fin de l'usage courant, e.g. échéances légale ou institutionnelle, intervalles temporels de validité, etc).

Selon les modèles de gestion, le cycle de vie des données peut être organisé de manière discrète (étape où phases successives, e.g. archives courantes, archives intermédiaires, archives définitives) ou selon un continuum, chacune des grandes étapes se subdivisant en sous étape de gestion. Par exemple l'étape de stockage peut se subdiviser plus en plusieurs sous étapes, notamment le stockage en ligne, le stockage dit « *near-ligne* », le stockage hors ligne, le stockage froid, l'archivage, etc.

La gestion du cycle de vie des données peut faire intervenir des mécanismes de gestion des droits numériques (en anglais « *Digital Rights Management* » (acronyme DRM), lesquels peuvent utiliser une ou plusieurs Mesures Techniques de Protection (acronyme MTP) visant à contrôler l'utilisation qui est faite des données

Ces mesures techniques ou logiciels peuvent viser à restreindre l'accès ou la lecture en fonction de paramètres comprenant le type de demandeurs, la zone géographique d'accès, les modalités de restitution (par exemple sur du support du matériel spécifique), restreindre ou empêcher la copie ou le transfert vers un appareil tiers, restreindre ou verrouiller des fonctions de lecture ou de modification du contenu, l'identification et le tatouage numérique des données.

### Chaines de blocs, Big Data, apprentissage automatique

Les modes de réalisation de l'invention peuvent utiliser des « *chaînes de blocs »,* pour améliorer l' « *apprentissage automatique* » réalisé sur des « *Big data ».* Ces objets ou expressions sont définies et explicitées ci-après.

Ces objets possèdent des propriétés intrinsèques, i.e. qui leur sont inhérentes et sont indépendantes du contexte d'utilisation. Cependant, les contraintes ou exigences aéronautiques sont nombreuses et complexes. Les contraintes et compromis « métier » sont difficiles à identifier clairement (invention de problème) et justifient ou structurent de manière sous-jacente des variations d'implémentation, qui autrement pourraient apparaître comme arbitraires.

### « Big data »

L'expression anglaise "Big data" désigne la collecte et l'analyse de données, effectuées de manière massive. Ce concept est associé avec des caractéristiques de nature technique qui comprennent: le *volume* (e.g. grandes collections de données, même si elles sont redondantes), la *variété* (e.g. de nombreuses sources différentes sont utilisées), la *vélocité* (e.g. les données sont « fraiches » ou constamment mises à jour dans des environnements changeants ou dynamiques), attestant d'une certaine *véracité* (e.g. les signaux faibles qui sont noyés dans le bruit ne sont pas supprimés et peuvent par suite être détectés ou amplifiés), pour représenter *in fine* une certaine *valeur* (par exemple d'utilité du point de vue technique et/ou métier). La présente invention renforce significativement les caractéristiques de *vélocité* et de *véracité* des données (données fraiches ou valides, pas obsolètes ou autrement datées).

### Apprentissage automatique

Différents types *d'apprentissage automatique* (ou machine) sont possibles. En effet les données manipulées étant contrôlées du point de vue temporel, la qualité de l'apprentissage peut être significativement améliorée. L'apprentissage automatique est un domaine de l'informatique qui utilise des techniques statistiques pour donner aux systèmes informatiques la possibilité "d'apprendre" avec des données (par exemple, pour améliorer progressivement les performances d'une tâche spécifique), et ce sans être explicitement programmé à cette fin.

L'apprentissage automatique est avantageux pour la détection et la reconnaissance des motifs ou schémas ou patterns. Il est fréquemment plus facile de collecter les données (par exemple, les données d'un jeu vidéo ou de société) que d'écrire explicitement le programme qui régit le jeu considéré. De plus, des réseaux de neurones (réalisation matérielle de l'apprentissage automatique, ou émulation logicielle) peuvent être réutilisés pour traiter de nouvelles données. L'apprentissage automatique peut être effectué sur des données particulièrement volumineuses, c'est-à-dire en utilisant autant de données que possible (e.g. stabilité, convergence, signaux faibles, etc). De nouvelles données peuvent être ajoutées en permanence et l'apprentissage peut être affiné.

Différents algorithmes d'apprentissage peuvent être utilisés, en combinaison avec les caractéristiques selon l'invention. Le procédé peut comprendre un ou plusieurs algorithmes parmi les algorithmes comprenant: les "machines à vecteur de support" ou "séparateurs à vaste marge" (en anglais « Support Vector Machine », acronyme SVM); le « boosting » (classifieurs); les réseaux de neurones (en apprentissage non-supervisé); les arbres de décision ("Random Forest"), les méthodes statistiques comme le modèle de mixture gaussienne; la régression logistique; l'analyse discriminante linéaire; et les algorithmes génétiques.

Les tâches d'apprentissage automatique sont généralement classées en deux grandes catégories, selon qu'il existe un "signal" ou des entrées d'apprentissage ou des "retours d'information" ou « sorties disponibles ».

L'expression « apprentissage supervisé » désigne une situation dans laquelle il est présenté à l'ordinateur des exemples d'entrées et des exemples de sorties (réelles ou souhaitées). L'apprentissage consiste alors en l'identification d'un entrelacs de règles fait correspondre les entrées aux sorties (ces règles peuvent être compréhensibles ou non pour l'homme).

L'expression «apprentissage semi-supervisé» désigne une situation dans laquelle l'ordinateur ne reçoit qu'un ensemble de données incomplet: par exemple il existe des données de sortie manquantes.

L'expression « apprentissage par renforcement» consiste à apprendre les actions à prendre, à partir d'expériences, de façon à optimiser une récompense quantitative au cours du temps. Au travers d'expériences itérées, un comportement décisionnel (appelé stratégie ou politique, qui est une fonction associant à l'état courant l'action à exécuter) est déterminé comme étant optimal, en ce qu'il maximise la somme des récompenses au cours du temps.

L'expression « *apprentissage non supervisé»* (également appelé apprentissage approfondi ou apprentissage profond) désigne une situation dans laquelle aucune annotation n'existe (pas de libellé, pas de description, etc), laissant l'algorithme d'apprentissage seul pour trouver une ou plusieurs structures, entre entrées et sorties. L'apprentissage non-supervisé peut être un objectif en soi (découverte de structures cachées dans les données) ou un moyen de parvenir à un objectif (apprentissage par les fonctionnalités).

Selon les modes de réalisation, la contribution humaine dans les étapes d'apprentissage automatique peut varier. Dans certains modes de réalisation, l'apprentissage automatique est appliqué à l'apprentissage automatique lui-même (réflexif). L'ensemble du processus d'apprentissage peut en effet être automatisé, notamment en utilisant plusieurs modèles et en comparant les résultats produits par ces modèles. Dans la plupart des cas, les humains participent à l'apprentissage automatique (*«Human in the loop* »). Les développeurs ou curateurs sont responsables de la maintenance des amas de données: ingestion de données, nettoyage des données, découverte de modèles etc.

L'apprentissage automatique peut correspondre à des architectures matérielles qui sont émulables par ordinateur (e.g. CPU-GPU), mais parfois non (des circuits dédiés à l'apprentissage peuvent exister).

Différents algorithmes d'apprentissage peuvent être utilisés. Le procédé peut comprendre un ou plusieurs algorithmes parmi les algorithmes comprenant: les "machines à vecteur de support" ou "séparateurs à vaste marge" (en anglais « Support Vector Machine », acronyme SVM); le « boosting » (classifieurs); les réseaux de neurones (en apprentissage non-supervisé); les arbres de décision ("Random Forest"), les méthodes statistiques comme le modèle de mixture gaussienne; la régression logistique; l'analyse discriminante linéaire ; et les algorithmes génétiques.

Matériellement, selon les modes de réalisation, le procédé selon l'invention peut être mis en œuvre sur ou par un ou plusieurs réseaux de neurones. Un réseau de neurones selon l'invention peut être un ou plusieurs réseaux de neurones choisis parmi les réseaux de neurones comprenant : a) un réseau de neurones artificiels (en anglais « feedforward neural network »; b) un réseau de neurones artificiels acyclique, e.g. un perceptron multicouche, se distinguant ainsi des réseaux de neurones récurrents ; c) un réseau de neurones à propagation avant ; d) un réseau de neurones de *Hopfield* (un modèle de réseau de neurones récurrents à temps discret dont la matrice des connexions est symétrique et nulle sur la diagonale et où la dynamique est asynchrone, un seul neurone étant mis à jour à chaque unité de temps) ; e) un réseau de neurones récurrents (constitué d'unités interconnectées interagissant non-linéairement et pour lequel il existe au moins un cycle dans la structure) ; f) un réseau neuronal convolutif (en anglais « CNN » ou « ConvNet » pour « Convolutional Neural Networks », un type de réseau de neurones artificiels acycliques feedforward, par empilage multicouche de perceptrons) ou g) un réseau antagonistes génératifs (en anglais « *generative adversarial networks* » acronymes GANs, classe d'algorithmes d'apprentissage non-supervisé)

### Registres distribués ou chaînes de blocs

Selon la définition donnée par Wikipédia, une chaîne de blocs (« blockchain » en anglais) ou un registre distribué (DLT pour « *Distributed Ledger Technology* » en anglais) est une base de données distribuée et sécurisée par des techniques cryptographiques. Les transactions échangées sont groupées en « blocs » à intervalles de temps réguliers, de manière sécurisée par cryptographie, qui forment une chaîne. Après avoir enregistré les transactions récentes, un nouveau bloc est généré et analysé. Si le bloc est valide (consensus distribué), le bloc peut être horodaté et ajouté à la chaîne de blocs. Chaque bloc est lié au précédent par une clé de hachage. Une fois ajouté à la chaîne de blocs, un bloc ne peut plus être ni modifié ni supprimé, ce qui garantit l'authenticité et la sécurité du réseau. Le chainage utilise des fonctions de hachage et des arbres de Merkle. Un arbre de hachage est constitué par un ensemble de sommes de contrôle interdépendantes. Des sommes de contrôles sont concaténées selon une structure en arbre. Un arbre de hachage permet de pouvoir vérifier l'intégrité d'un ensemble de données sans disposer nécessairement de la totalité des données au moment de la vérification. Les enregistrements dans une chaîne de blocs sont protégés contre la falsification ou la modification par les nœuds de stockage : falsifier un bloc nécessite de falsifier l'ensemble de la chaîne, de sorte que le coût total devient prohibitif et garantit un niveau de confiance en la non-falsification de l'ensemble de la chaîne de blocs. Les transactions sont visibles dans l'ensemble du réseau (sauf élagage dit « pruning »).

Le temps est un facteur important pour les chaînes de blocs (notions de *broadcasting,* de propagation, de latence, etc.). Le consensus distribué de l'ensemble des nœuds du réseau peut prendre un temps très variable selon les technologies utilisées. Il peut être accéléré en utilisant diverses techniques, notamment des « *sidechains* », lesquelles augmentent aussi les capacités de stockage.

Dans le cadre du consensus distribué, une chaîne de blocs peut utiliser une validation par preuve de travail (« *proof of work* »). Du point de vue mathématique, une preuve de travail est « difficile à fournir mais facile à valider ». Les systèmes de validation par preuve sont généralement asymétriques: le calcul qui est requis en contrepartie d'une demande de service est couteux pour le demandeur mais demeure facilement vérifiable par un tiers. Différentes techniques peuvent être utilisées, notamment *hashcash* ou un "client-puzzle".

Les nœuds « mineurs » ou de « minage » sont des entités dont le rôle est d'alimenter le réseau en puissance de calcul, pour permettre la mise à jour de la base de données décentralisée. Ces mineurs peuvent être rétribués par la distribution de jetons cryptographiques (« *tokens* »). D'autres modes de compensation (en complément ou par substitution) prévoient des commissions sur les transactions. Des « mineurs » ne sont pas toujours nécessaires : dans le cas des chaînes de blocs privées par exemple, les participants à la chaîne de blocs maintiennent eux-mêmes la base de données distribuée.

Une chaîne de blocs peut être publique ou privée, ou selon des gouvernances intermédiaires, qui peuvent utiliser différentes barrières à l'entrée (validation par preuve de travail). Une chaîne de blocs « publique » fonctionne sans tiers de confiance (modèle dit « *trustless* »), généralement avec une validation par preuve de travail complexe (e.g. *hashcash).* Une chaîne de blocs publique ne définit généralement pas d'autre règle que celle du code constitué par la technologie protocolaire et logicielle qui la compose. Une chaîne de blocs « privée » comprend des nœuds participants au consensus qui sont définis à l'avance puis authentifiés. Ses règles de fonctionnement peuvent être éventuellement extrinsèques.

### Contrats intelligents

Les chaînes de blocs peuvent être ou devenir programmables par l'emploi de « contrats intelligents » (« *smart contracts* » en anglais). Les contrats intelligents sont des logiciels ou protocoles informatiques qui facilitent, vérifient et exécutent la négociation ou l'exécution d'un contrat. Ils visent à émuler ou approcher la logique des clauses contractuelles (droit des contrats). Les contrats intelligents ne sont pas strictement équivalents à des accords contractuels. Ils contribuent à rendre la violation d'un accord coûteux car ils contrôlent un bien par le biais de moyens numériques. Ils peuvent prévoir - ou pas - l'intervention de tiers au contrat pour suivre son exécution (par exemple des machines ou « oracles » ou services d'oracle). Un contrat intelligent sont un code logiciel qui est stocké et est exécuté sur/par une chaîne de blocs et est déclenché par des données externes qui lui permet de modifier d'autres données, dans la chaîne de blocs ou ailleurs.

L'exécution d'un contrat intelligent est prédictible/prévisible; à tout le moins le code et donc la nature des calculs ou tests effectués par ce code sont connus. Le code d'un contrat intelligent est stocké sur ou dans la chaîne de blocs ; l'exécution du contrat intelligent est effectué en parallèle lors de la validation des blocs (les ressources de calcul sont distribuées, ce qui signifie que l'exécution d'un contrat intelligent est sûre en elle-même : le code du contrat intelligent est répliqué en plusieurs nœuds de l'architecture mettant en œuvre la chaîne de blocs ; étant déterministes, les résultats des différentes exécutions doivent être identiques. Par suite, le code ainsi que l'exécution du code sont sûres.

Comme pour tout programme ou code informatique, différents langages de programmation sont disponibles, avec différents modèles de sécurité et de régulation (contrat-cadre régissant d'autres contrats, contrats en cascade, etc). Les formes prises par les contrats intelligents peuvent être diverses (e.g services, agents, *snippets,* scripts, SOA, API, *add-ons,* plug-ins, extensions, *DLC,* etc). La logique mathématique (les prises de décisions opérant sur les données) peut être celle de la logique *classique, floue, combinatoire, intuitionniste, modale,propositionnelle, partielle, para-consistante, etc* ou une combinaison de ces logiques. Le logiciel peut être codé en partie ou en totalité sur forme matérielle (e.g. FPGA). Un contrat intelligent peut être en totalité ou en partie en source ouverte (« *open source"*) et/ou en source fermée (" *closed source* »). Dans le cas de source ouverte, le code est auditable ou vérifiable par les parties ou les tiers. Un contrat intelligent peut combiner des parties en source ouverte (e.g. auditables, vérifiables, améliorables, etc) avec des parties fermées (propriétaires, secrètes, sensibles, etc). Une source fermée peut être un binaire, éventuellement obfusqué ou durci (« *hardened* »). Les techniques cryptographiques peuvent être diverses : symétrique, asymétrique, « *post-quantum », « quantum-safe* », avec utilisation de « *Quantum-Key-Distribution* », etc). Un contrat intelligent peut être lisible par l'homme et/ou la machine (*"human and*/*or machine readable »*)*.*

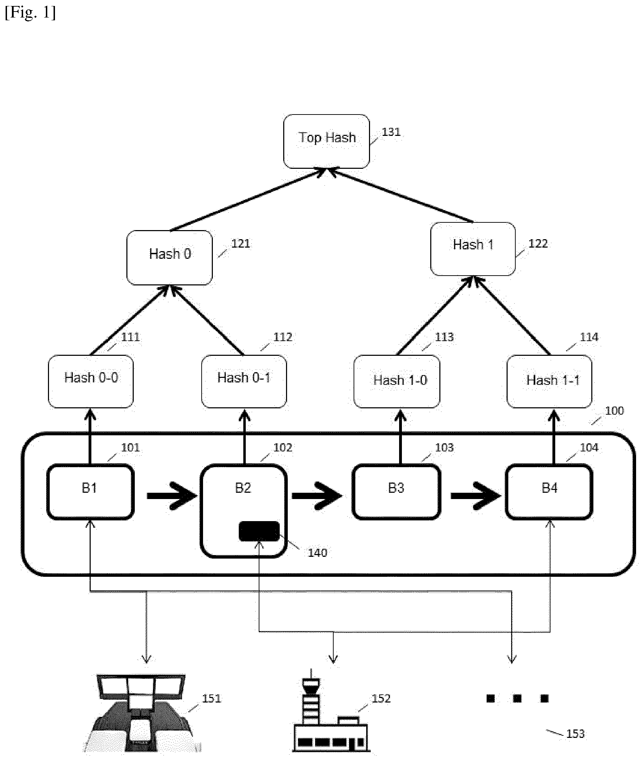

La figure 1 illustre le fonctionnement d'une chaîne de blocs;
La figure 1 montre 4 blocs de données B1 à B4 (101, 102, 103, 104). L'arbre de hachage est constitué par un ensemble de valeurs de hash interdépendantes. Les feuilles de l'arbre sont les valeurs de hash de chacun des blocs de données initiales (111, 112, 113, 114). Dans un arbre de Merkle (binaire), ces valeurs de hachage sont alors concaténés deux à deux pour pouvoir calculer un nouveau hash parent (121, 122). Ainsi de suite jusqu'au sommet de l'arbre ou on obtient un hash-sommet (131). Pour garantir l'intégrité d'un bloc par rapport à l'ensemble des données, il suffit de posséder les valeurs de hash des frères, les valeurs de hash des oncles et le hash-sommet. De plus, seul le hash-sommet (131) doit être récupéré de manière sure pour garantir l'intégrité de l'ensemble des données représenté par l'arbre. Par exemple, si on veut vérifier l'intégrité du block B2, il suffit d'avoir récupéré le hash 0-0 (son frère 111), le hash1 (son oncle 122) et le hash-sommet (131).

Un bloc de données peut comprendre un ou plusieurs codes ou programmes ou contrats intelligents 140.

Concrètement, un contrat intelligent 140 peut mettre un œuvre un ou plusieurs mécanismes : (a) d'accès aux données ou parties de données : -i) gestion des droits d'accès et partages des clefs de chiffrement (dans le cas d'un chiffrement asymétrique la clef privée est secrète et connue du seul utilisateur ou la clef publique peut être connue d'un registre) ; des mécanismes de chiffrement matériel peuvent être utilisés (TPM ou HSM, carte à puce, etc) ; ii) abonnement par unité de temps (journalier, hebdomadaire, mensuel, annuel, etc) et/ou par volume de données (e.g. au Mo octets de données téléchargées) ; des systèmes de crédits ou de points peuvent être utilisés ; b) de paiement ; les transactions peuvent être réglées en unité de compte (crypto-monnaie ou monnaie fiduciaire e.g. USD ou EUR) ;

Les blocs de données (101, 102, 103, 104) sont produits puis consommés, i.e. accédés, en lecture et/ou écriture, par des parties ou entreprises (e.g. illustrées par 151, 152, 153).

Une partie ou entreprise ou consommateur peut être le constructeur de l'avion, un assembleur, un équipementier, un client ou une compagnie aérienne, une société de maintenance, une autorité de régulation, etc.

Une partie peut être « producteur » de données *et*/*ou* « consommateur » de données. Un consommateur de données peut être dénommé « client » ou « demandeur » ou « receveur » ou « acheteur » par la suite. Un producteur peut être dénommé « émetteur » ou « serveur » ou « fournisseur » ou « vendeur » par la suite. L'expression « et/ou » souligne le fait que la production et la consommation peuvent être successives ou alternatives, ou même simultanées. Comme chaque partie peut acheter et//ou vendre, prendre licence et/ou concéder licence, céder ou donner ou partager des données qui lui sont propres, elle peut aussi accéder aux données partagées par les autres parties. La mise en partage des données permet de créer d'autres données, dont certaines peuvent avoir de la valeur marchande ou technique ou autre.

Par exemple, les calculateurs embarqués 151 dans un aéronef consomment et produisent une quantité de données extrêmement importante. La plupart des échanges restent internes à l'aéronef, et servent au fonctionnement global de l'aéronef. Certaines données peuvent devenir externes, i.e. être extraites et stockées ou transmises en ligne, pour diverses applications. D'autres données, internes ou externes peuvent être partagées.

Comme autre exemple de producteur/consommateur de données, les autorités de contrôle du trafic aérien 152 peuvent produire et consommer des données. Les données peuvent concerner des notifications NOTAM, des alertes diverses, des statistiques de routage ou sur les plans de vol etc.

Enfin, une grande diversité de parties 153 peuvent consommer ou produire des données utiles : météorologiques, des services d'analyse (« analytics »), etc.

Différents modes de réalisation sont décrits ci-après.

Il est décrit un procédé mis en œuvre par ordinateur pour la gestion du cycle de vie de données aéronautiques stockées dans une chaine de blocs, dite primaire, comprenant les étapes consistant à : recevoir des données aéronautiques depuis un producteur de données ; chiffrer les données reçues par un contrat intelligent dit primaire ; et stocker les données chiffrées dans la chaine de blocs primaire.

Dans un développement, le procédé comprend les étapes consistant à : recevoir une demande d'accès à des données aéronautiques stockées dans ladite chaine de blocs primaire depuis un consommateur de données; déterminer la réponse à la demande d'accès par ledit consommateur de données en exécutant le contrat intelligent primaire; le cas échéant, déchiffrer les données.

Dans un développement, le contrat intelligent comprend un ou plusieurs programmes d'ordinateur contrôlant la gestion du cycle de vie des données, la gestion du cycle de vie des données étant déterminée par la mise en œuvre de règles logiques, lesdites règles logiques comprenant des règles relatives à la production, respectivement à la consommation, et au chiffrement, respectivement au déchiffrement des données.

Dans un développement, les règles logiques manipulent des paramètres temporels comprenant une date de début de validité et/ou une date de fin de validité, un intervalle temporel de validité, une obsolescence binaire ou quantifiée en fonction du temps et/ou des paramètres de qualité. La qualité peut être quantifiée en termes de confiance, de tolérance d'erreur, par score, de criticité quant aux erreurs en aval lors de la prise en compte dans un modèle, etc.

Dans un développement, le contrat intelligent primaire comprend un ou plusieurs contrats intelligents stockés et exécutés sur la chaine de blocs primaire. Par construction, la bonne exécution d'un contrat intelligent est garantie, puisque son code est répliqué dans les nœuds participant à la chaîne de blocs. Le résultat ne peut pas être falsifié et le code n'est pas modifiable. Par ailleurs, dans une même chaine de blocs, une pluralité de contrats peuvent se modifier les uns les autres « en réseau », de manière systémique (contrat-cadre, avenant, etc).

Dans un développement, le contrat intelligent primaire est stocké et/ou exécuté sur une chaine de blocs secondaire, indépendante de la chaine de blocs primaire. Une architecture en N couches permet de dissocier les contrôles et d'augmenter la flexibilité des usages. Dissocier les chaines de blocs entre données (e.g. les faits) et contrat intelligent (e.g. les règles) permet plus de flexibilité, à tout le moins des modalités de gouvernance différentes. Par exemple, un contrat intelligent dit secondaire peut être modifié tandis qu'un contrat intelligent primaire pourrait ne pas l'être. En réalité, dans certains modes de réalisation, le contrat intelligent peut même se résumer à un simple programme sous contrôle « centralisé », et ne pas nécessiter de chaine de blocs. Dans un développement, le chiffrement est un chiffrement asymétrique, utilisant une ou plusieurs paires de clefs privées et publiques, le procédé comprenant en outre une étape de suppression d'une ou de plusieurs clefs privées permettant l'accès aux données. Avantageusement, dans le cas du chiffrement asymétrique, il est possible de détruire une clef privée (la clef publique étant connue) pour empêcher l'accès aux données codées (i.e. chiffrées). Cette suppression peut être déclenchée par le module LCM par exemple, ou par l'entité de niveau supérieur (contrat intelligent).
Dans un développement, le procédé comprend en outre une étape de suppression d'une ou de plusieurs données et/ou règles de gestion du cycle de vie.
Dans un développement, l'étape de suppression d'une ou de plusieurs données est déterminée par la manipulation de paramètres temporels de validité. Une donnée erronée, falsifiée ou malicieuse peut par exemple être supprimée via la gestion de l'obsolescence des données (par exemple une donnée détectée comme malicieuse pourra être associé à un taux de confiance nul ou négatif, ou sa durée de vie égale à zéro, ou sa date de validité placée dans le passé).
Dans un développement, le procédé comprend en outre une étape de suppression d'une ou de plusieurs paramètres de gestion du cycle de vie. Additionnellement ou en substitution à la suppression d'une ou de plusieurs clefs (par exemple privées), il est possible de procéder à la suppression ou à la modification d'objets de plus haut niveau, i.e. les règles de gestion du cycle de vie elles-mêmes.
Dans un développement, l'étape de suppression est déclenchée en fonction de données internes à la chaine de blocs primaire. Dans un mode de réalisation, par exemple via des métadonnées, qui sont des données sur les données, il est possible de contrôler le cycle de vie des données. Certaines métadonnées peuvent en effet être inscrites lors de la production des données. Dans certains modes de réalisation, il est aussi possible que les données ou les métadonnées puissent contenir des dates de péremption (absolues, ou bien relatives), des intervalles de validité (durée de validité), des dates de fin de vie, etc. Dans un mode de réalisation, le module de gestion du cycle de vie des données (en pratique un programme monolithique ou un ensemble de programmes) agit comme un « daemon », i.e. parcours les chaines de blocs et vérifie les dates de validité des données stockées.
Dans un développement, l'étape de suppression est déclenchée en fonction de données reçues depuis un ou plusieurs oracles ou services d'oracle. Les données des oracles sont des données externes à la chaine de blocs. Les données d'oracle, plus généralement de déclenchement, peuvent être de nature machine et/ou humaine (contrôle manuel depuis un tiers de confiance, ou résultat algorithmique, ou combinaison des deux). Par exemple, un avionneur donné (contributeur à la chaine de blocs) peut décider soudainement qu'un ensemble de données ne doivent plus être accessibles, quel que soit le contexte et le consommateur. Alternativement, certaines données peuvent être autorisées (a contrario interdites) à certains utilisateurs, et ce selon des granularités fines (allant jusqu'à un champ de données brutes).
Dans un développement, le chiffrement utilise la distribution quantique de clefs et/ou comprend du chiffrement homomorphe et/ou du chiffrement post-quantum.
Dans un développement, le chiffrement utilise trois clefs, dont une clef est de type persistante, ladite clef persistante étant détenue par un tiers de confiance et dont la destruction empêche le déchiffrement de données.
Dans un développement, le contrat intelligent réalise des transactions financières en fonction des étapes de chiffrement et/ou de déchiffrement des données aéronautiques. Dans un développement, une chaine de blocs est une chaine de blocs au moins partiellement modifiable ou éditable.
Dans un développement, une fonction de hachage utilisée est une fonction de hachage de type caméléon.
Dans un développement, un bloc de la chaine de bloc comprend un identifiant de bloc et un contenu de bloc, les identifiants étant chainés, mais pas les contenus des blocs. Dans un développement, le procédé comprend en outre une ou plusieurs étapes d'apprentissage automatique. L'apprentissage automatique peut être avantageux en ce qu'il contribue à gérer le cycle de vie des données (LCM). Par exemple, il peut être déterminé qu'une certaine catégorie de données produit des résultats indésirables ou de mauvaise qualité en aval. Par suite, les algorithmes d'apprentissage automatiques peuvent résulter en des filtres adaptatifs appliqués sur les données (modifications des dates d'expiration, etc)
Il est décrit un produit programme d'ordinateur, ledit programme d'ordinateur comprenant des instructions de code permettant d'effectuer une ou plusieurs ou toutes les étapes du procédé, lorsque ledit programme est exécuté sur un ordinateur.
Dans un développement, le système pour la gestion du cycle de vie de données aéronautiques comprend des ressources de calcul, de stockage et de réseau pour la mise en œuvre d'une ou de plusieurs des étapes du procédé.
Dans un développement, un producteur de données est un aéronef (ou un FMS ou un EFB) et un consommateur de données est un autre aéronef (ou un FMS ou un EFB). Les échanges de données peuvent être effectués entre des humains et/ou des machines, mais dans des modes de réalisation avantageux, il s'agit d'échanges M2M (Machine-to-Machine, e.g. haute fréquence, grands volumes, transactions automatiques, etc) Avantageusement, les échanges se font entre systèmes de gestion de vol, de manière à augmenter la qualité des données manipulées (dont la quantité va en s'accroissant)
Dans un développement, le système comprend en outre un ou plusieurs réseaux de neurones configurés pour l'apprentissage automatique, lesdits un ou plusieurs réseaux de neurones étant choisis parmi les réseaux de neurones comprenant : un réseau de neurones artificiels; un réseau de neurones artificiels acyclique; un réseau de neurones récurrents; un réseau de neurones à propagation avant; un réseau neuronal convolutif; un réseau de neurones antagonistes génératifs. Dans un mode de réalisation, un ou plusieurs réseaux de neurones sont émulés de manière logicielle et/ou étant des circuits physiques (dans un mode de réalisation les entrées et/ou les sorties de ces circuits sont contrôlés ou contrôlables par une pluralité de chaînes de blocs et/ou par un ou plusieurs contrats intelligents.

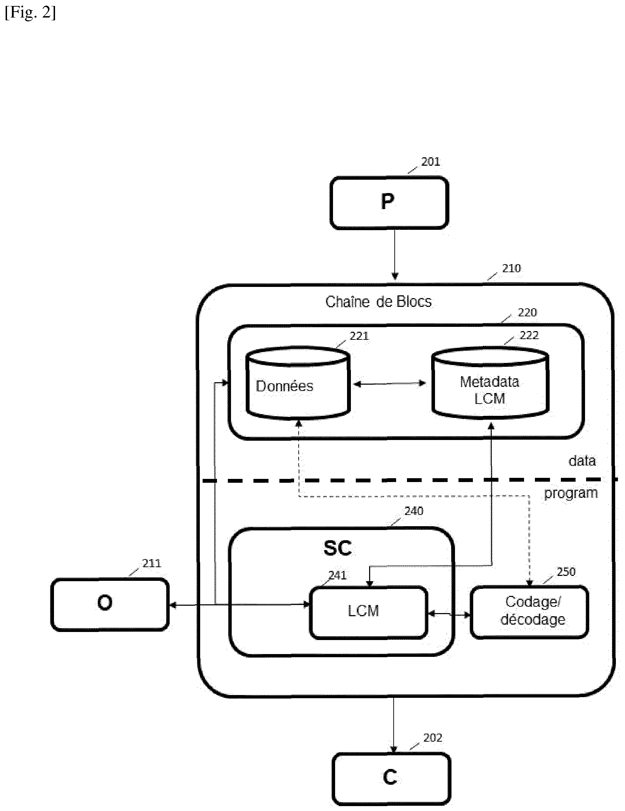

[fig.2] schématise le fonctionnement de l'invention;
La figure montre un producteur de données P (201), une chaîne de blocs (de type privée) (210), un Oracle ou un service d'Oracle (211), et un consommateur de données C (202).

Dans un mode de réalisation, la chaîne de bloc (210) stocke des données (par exemple chiffrées) ainsi que des métadonnées (par exemple, en clair) relatives à la gestion du cycle de vie des données (par exemple début de vie, fin de vie). Par ailleurs la chaîne de bloc (210) héberge également un ou plusieurs contrats intelligents ou SC (240), lesquels gouvernent des mécanismes (241) de codage/décodage (par exemple en particulier chiffrement/déchiffrement). Un Oracle ou un service d'Oracle (211) interagit avec la chaîne de bloc (210), et déclenchent notamment l'exécution d'un ou de plusieurs contrats intelligents (240). Ces contrats intelligents (240) gouvernent à leur tour un ou plusieurs mécanismes de gestion de cycle de vie (241), en anglais « Life Cycle Management », acronyme LCM. En réponse à une requête par un consommateur de données (202), l'accès conditionnel gouverné par le mécanisme (241) est accordé ou pas, selon des modalités qui peuvent être différentes.

Dans un mode de réalisation de l'invention, le mécanisme LCM 241 implémenté un accès conditionnel aux données, par exemple via un chiffrement des données.

### Paramètres de gestion du cycle de vie (241)

Dans un mode de réalisation, la gestion du cycle de vie des données selon l'invention comprend la prise en compte de paramètres comprenant notamment a) la sensibilité des données (par exemple en matière de données personnelles versus le droit à l'oubli), b) l'obsolescence des données (e.g. péremption, date limite, intervalles de validité etc.), c) la durée de vie légale le cas échéant (e.g. RGPD) et/ou d) la survenue d'événements (i.e. enquête, rapports, fin de vie, etc ; e.g. non-paiement d'annuités, absence de consultation)

Dans un mode de réalisation, l'invention comprend un module de partage collaboratif de données issues des calculateurs embarqués dans l'aéronef, qui est en relation avec divers utilisateurs et/ou fournisseurs de données.

### Métadonnées (222)

Dans un mode de réalisation particulier de l'invention, un producteur de données communique de nouvelles données à la chaine de blocs. Des métadonnées (données sur les données) sont déterminées (selon les paramètres des gestion du cycle de vie précédemment énoncés), lesquelles associent notamment les données avec des faits et/ou règles de cycle de vie (e.g. conditions de fin de vie). Dans un mode de réalisation particulier de l'invention, les métadonnées peuvent rester en clair, tandis que les données sont chiffrées sur la chaine de blocs. Les données et/ou les métadonnées ajoutées à la chaine de blocs sont déterminées et/ou vérifiées de diverses manières. Dans un mode de réalisation, il est vérifié l'intégrité du bloc proposé par un nœud valide qui propose l'ajout du bloc à la chaîne de blocs. Un gestionnaire de cycle de vie accède aux blocs de la chaîne de blocs, reçoit depuis l'extérieur de la chaîne de blocs des informations qui peuvent déterminer que des conditions de fin de vie des données sont satisfaites. Le cas échéant différent traitement sont possibles le gestionnaire du cycle de vie des données est en interaction avec un ou plusieurs mécanismes de codage/décodage. Cette interaction permet le stockage des données mais également leur destruction (logique et/ou physique, i.e. l'accès aux données est effacé ou détruit ; les données sont physiquement effacées des disques durs ou des ressources de stockage utilisées). Le gestionnaire du cycle de vie des données peut déclencher une ou plusieurs opérations de codage ou encodage supplémentaire aux fins de stockage dans une ou plusieurs chaînes de blocs. Par suite les données stockées dans lesdites une ou plusieurs chaînes de blocs sont accédées par un consommateur de données.

Dans certains modes de réalisation, l'association entre les données 221 et les métadonnées de 222 peuvent être sophistiquées. Elles peuvent être statiques au cours du temps. Elles peuvent également être évolutives au cours du temps (de manière planifiée), ou également de manière dynamique (en fonction de l'utilisation des données).

### Mécanisme (250)

Le mécanisme (250) peut comprendre un ou plusieurs opérations ou étapes de codage/ décodage, e.g. de chiffrement/déchiffrement, de masquage, d'obfuscation, de gestion des droits numériques, une combinaison de ces opérations, etc.

Dans un mode de réalisation, le mécanisme mis en œuvre selon l'invention comprend une ou plusieurs opérations de codage et/ou de décodage.

Dans un mode de réalisation, le mécanisme mis en œuvre selon l'invention comprend une ou plusieurs opérations de chiffrement et/ou de déchiffrement.

Une différence entre codage et chiffrement réside dans la volonté de protéger des informations et d'empêcher des tiers d'accéder aux données dans le cas du chiffrement. Le codage (e.g. compression) consiste à transformer des données vers un ensemble de mots ou symboles (dictionnaires, etc). Le codage peut rendre plus difficile l'accès aux données. De façon générale un codage permet de passer d'une représentation des données vers une autre. Le codage (respectivement décodage) peut désigner une pluralité d'opérations, éventuellement combinées (compression, représentation robuste aux erreurs de transmission, codage visuel, transcodage, chiffrement, masquage, etc.) Des mécanismes additionnels (e.g. masquage, stéganographie, etc) peuvent être implémentés.

### Modèle producteur-consommateur

Dans un mode de réalisation, le procédé suit un modèle « producteur-consommateur ». Un émetteur ou producteur de données produit ou génère des données (depuis des capteurs et/ou une pluralité de sources de données, avec ou sans traitement. Un producteur de données peut notamment être un aéronef (e.g. des calculateurs embarqués) Un récepteur ou consommateur demande ou formule des requêtes visant la fourniture de données. Un consommateur de données peut notamment être une compagnie aérienne ou un autre aéronef, AOC, une entité du contrôle de la navigation aérienne etc.

Les rôles de producteur et consommateur peuvent évoluer au cours du temps. Une entité (homme et/ou machine) peut générer des données à un certain instant, puis en consommer d'autres. Inversement, une entité habituellement consommatrice de données peut épisodiquement en générer. Les entités de production et de consommation contribuent à l'édification de bases de données, partagées selon des modalités diverses (contrôles d'accès etc).

Des métadonnées (données sur les données) sont associées aux données générées. Ces métadonnées comprennent notamment des paramètres relatifs à la gestion du cycle de vie). Les données et/ou les métadonnées sont stockées, de manière traditionnelle (i.e. « *off-chain* » ou « hors chaine de blocs » en français) ou alors dans une chaîne de blocs, *« on-chain* »). Le cas échéant les données sont validées (« *off-chain* » par l'homme et/ ou la machine en fonction de critères prédéfinis) ou « *on-chain* » i.e. vérifiées par consensus distribué et ajoutées à un bloc de la chaîne de blocs. Un ou plusieurs contrats intelligents, qui sont hébergés sur la chaîne de blocs (héritant donc des propriétés de cette dernière), peuvent notamment comprendre un ou plusieurs programmes logiciels visant la gestion du cycle de vie des données. Un Oracle ou un service d'Oracle peuvent déclencher une ou plusieurs conditions de la réalisation d'un contrat intelligent : ce dernier active un mécanisme de codage ou de décodage des données. Par exemple le mécanisme de codage peut comprendre un mécanisme de chiffrement, conditionnée à des intervalles temporels. Un client ou consommateur peut alors accéder à toute ou partie des données aéronautiques stockées sur la chaîne de blocs.

Dans un mode de réalisation de l'invention, une date de fin de vie est par exemple associée avec des données ou un bloc de données. Le contrat intelligent chiffre les données selon un mécanisme de gestion des droits. Les données sont contrôlées par le module DRM. Avant l'échéance ou l'expiration du terme (ou de l'intervalle temporel), signalés comme tel par un Oracle ou un service d'Oracle, les données sont rendues accessibles, par exemple déchiffrées, à une ou plusieurs parties prédéfinies parmi les parties participantes à la chaîne de blocs. Si la date de fin de vie est dépassée, le module DRM ne déchiffre pas ou plus les données (et ce quel que soit la partie demanderesse).

### Chiffrement des données (250)

Le chiffrement des données peut-être effectué selon des procédés cryptographie connus (chiffrement symétrique, chiffrement asymétrique, cryptographie quantique QKD, chiffrement *post quantum* i.e. robuste aux attaques d'ordinateurs quantiques le cas échéant, etc...).

Afin de garantir la sécurisation totale et inaliénable de la clef de chiffrement, l'invention pourra dans un mode de réalisation utiliser la distribution de clés quantiques (« QKD » pour Quantum Key Distribution). Une clé quantique se caractérise en ce qu'il fonde sa sécurité non pas sur la difficulté calculatoire supposée de certains problèmes, comme c'est le cas pour les protocoles cryptographiques utilisés aujourd'hui, mais sur l'impossibilité supposée de violer les principes de la physique quantique : il y a notamment le théorème de non-clonage, qui garantit qu'il est impossible pour un adversaire de créer une réplique exacte d'une particule dans un état inconnu. Ainsi il est possible sous certaines conditions de détecter une tentative d'interception de la clé.

Dans une alternative, le cryptage pourra être effectué avec un algorithme de cryptographie homomorphique (ou homomorphe). Un chiffrement homomorphe est un chiffrement qui possède des propriétés algébriques particulières, lesquelles permettent de conduire des opérations mathématiques (de calcul) sur les données chiffrées (directement). Le déchiffrement du résultat d'un calcul effectué sur des données chiffrées donne le même résultat que le même calcul effectué sur les données non chiffrées. Cette propriété permet de conserver la confidentialité des données pendant des calculs. Un exemple d'application d'un chiffrement homomorphe pour la délégation de calculs pourrait être le cas de figure où un utilisateur souhaiterait faire un calcul coûteux - dont il ne dispose pas nécessairement des ressources nécessaires pour l'exécuter - et aimerait faire appel à un service de cloud computing auquel il ne fait pas nécessairement confiance pour effectuer ses calculs. Avantageusement, cette solution peut s'appliquer au cas des données personnelles dont on souhaite maintenir l'anonymat : plutôt que de les «supprimer», on peut laisser leur version chiffrée à disposition. Les données resteront chiffrées mais des analyses en IA pourront quand même continuer à être réalisées sur ces données, sans qu'apparaisse l'identité du détenteur.

### Programme ou contrat intelligent 240

Le mécanisme implémenté par le contrat intelligent peut être de plusieurs types. Il peut s'agir d'un mécanisme de codage/décodage, notamment de chiffrement déchiffrement. Dans un mode de réalisation, le mécanisme comprend la gestion de la durée de vie des clés de chiffrement.

Dans un mode de réalisation, la confiance est institutionnelle et déléguée à un tiers de confiance (e.g. administration nationale ou internationale assermentée, huissier, etc.). Par exemple le tir de confiance peut détenir les clés de chiffrement leur date butoir ou la durée de vie de ces clés (ou encore connaître l'événement où les conditions permettant de calculer ses dates ou durée). Il peut notamment supprimer les mécanismes de décodage (en particulier de déchiffrement) lorsque l'événement de suppression des données se produit par exemple expiration de validité ou péremption d'une donnée (droit à l'oubli ou autre). Concrètement, le tiers de confiance peut procéder à la suppression logique et/ou physique des clés de chiffrement/déchiffrement.

Dans un mode de réalisation, la confiance n'est plus institutionnelle mais recours à l'informatique distribuée, notamment en utilisant une chaîne de blocs. En effet la durée de vie des clés de chiffrement peut être gérée dans d'une chaîne de blocs. Par exemple pour des clés de chiffrement dont la date butoir est connue (soit de manière absolue, soit par calcul entre la date de production ou de création et une durée de vie prédéfinie), les mécanismes de codage décodage peuvent être mis en place dans la chaîne de blocs. Dans un mode de réalisation particulier, un bloc est créé chaque jour et lorsque la date butoir devient la date du jour le bloc correspondant dans la chaîne et supprimé (ou bien l'accès à ce bloc est supprimé). Concrètement les clés de déchiffrement sont supprimées logiquement et ou physiquement. De fait les données ne sont effectivement plus accessibles.

Dans un mode de réalisation, la suppression de la chaîne de blocs en tout ou partie peut être réalisée par un tiers de confiance, c'est-à-dire piloté par un être humain ou une collectivité d'individus. Dans un mode de réalisation la suppression de la chaîne de blocs en tout ou partie peut être déclenchée par des programmes (contrat intelligent) i.e. des machines. Dans un mode de réalisation la suppression de la chaîne de blocs en tout ou partie peut être déterminée conjointement par l'homme et la machine. Avantageusement, le procédé selon l'invention permet d'éviter la suppression d'une pluralité de blocs dans la chaîne de blocs. En effet le mécanisme de codage décodage implémenté par le contrat intelligent mise en œuvre dans les parts la chaîne de blocs permet notamment d'arranger ou de modifier ou de remanier les métadonnées associées aux données générées stockées dans la chaîne de blocs.

Dans un mode de réalisation, à la création d'un bloc de la chaîne de blocs (bloc chiffré, ou en clair), le contrat intelligent détermine si le bloc créé comprend des faits et des règles prédéfinies. Les faits comprennent notamment des données temporelles (de déclenchement, par exemple une date comme une date butoir, une durée, un intervalle de temps, etc), ou des données particulières prédéfinies (e.g. des identités de personnes physiques, ou de serveurs particuliers dont émanent les requêtes etc.), lesquelles peuvent être manipulés par des règles logiques. Les données ou faits peuvent servir de déclencheurs d'opérations ultérieures. Les règles logiques peuvent notamment comprendre des règles relatives à la gestion du cycle de vie. Par exemple, des conditions de fin de vie des données peuvent être écrites dans un bloc (e.g. paiement d'annuité, fin de vie, expiration, échéances) Dans un mode de réalisation, les données causant le déclenchement d'étapes peuvent être extérieur à la chaîne de blocs, c'est-à-dire provenir d'un ou de plusieurs Oracles (e.g accédées par exemple sous forme de Web services, d'APIs, ou plus généralement un canal de communication) Dans un mode de réalisation, les données de déclenchement peuvent être internes à la chaîne de blocs, c'est-à-dire y être inscrites ou stockées.

Dans un mode de réalisation, l'étape déclenchée comprend la réalisation par le contrat intelligent d'une étape de codage et ou de décodage supplémentaire. Par exemple, le contrat intelligent peut chiffrer en tout ou partie le bloc.

Dans un mode de réalisation, un ou plusieurs programmes extérieurs à la chaîne de blocs peuvent déterminer les étapes de codage ou de chiffrement. Par exemple les mécanismes de codage ou de chiffrements peuvent être gérés par un tiers de confiance (homme et/ou machine).

Autrement dit, si le stockage peut être effectué sur une chaîne de blocs, la programmation de ladite chaîne de blocs peut-être effectués *on-chain* ou dans une variante de réalisation *off-chain.*

Dans un mode de réalisation, la gestion des oracles peut être effectuée de manière statique, c'est-à-dire avec des oracles garantis « sûrs » par des tiers de confiance (e.g. État, notaires, huissiers, établissements bancaires).

Dans un mode de réalisation, la gestion des oracles peut être effectuée de manière dynamique au moins un Oracle ou services d'Oracle peuvent déterminer les faits et ou règles de déclenchement directement dans la chaîne de blocs, laquelle est validée par consensus distribué entre les différents partis participantes.

Dans un mode de réalisation, la chaîne de blocs selon l'invention est une chaîne requérant une validation par de travail (chaînes de blocs publique ou ouverte). Dans d'autres modes de réalisation, la chaîne de blocs est privée c'est-à-dire organisée entre tiers identifiés (par exemple préalablement authentifié.

En réponse à la satisfaction des conditions énoncées dans les règles logiques, par exemple lorsque la date courante devient la date butoir, les mécanismes de gestion de cycle de vie des données peuvent s'effectuer. Les étapes ou opérations sont sélectionnées parmi les opérations comprenant les étapes ou opérations consistant à : supprimer un ou plusieurs pointeurs vers les données ; supprimer une ou plusieurs données ; supprimer une ou plusieurs clés de chiffrement ; supprimer une ou plusieurs entrées dans une liste d'accès (ACL, acronyme de « Access Control List »). Il est à noter qu'une opération d'effacement peut être une opération d'effacement sécurisé (e.g. à plusieurs passages effacements robustes à la rémanence des données, formatage de bas niveau, etc).

Ainsi, le contrat intelligent peut détruire le mécanisme de décodage (e.g. effacement sécurisé de la clef de déchiffrement), ce qui rend illisible le bloc concerné de la chaîne de blocs, bien que ledit bloc puisse toujours être vérifié par les nœuds participants au maintien de la chaîne de blocs

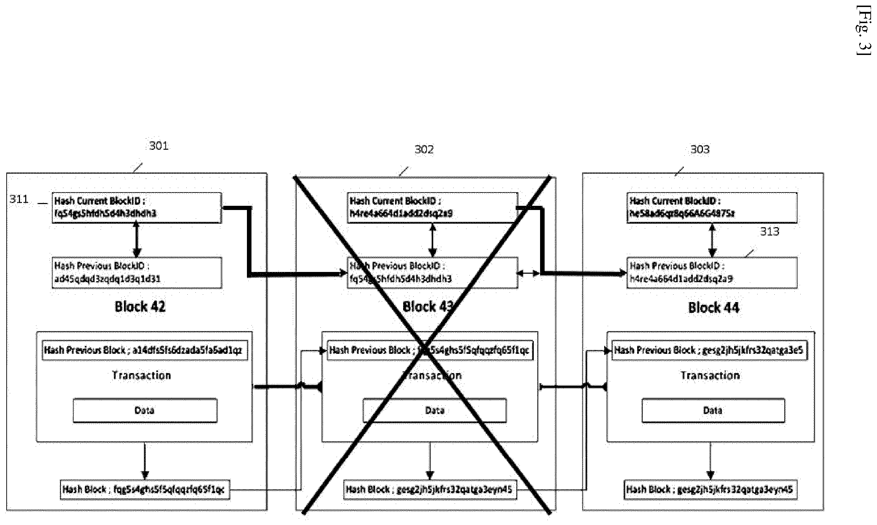

[fig.3] illustre un mode de réalisation de l'invention, notamment pour la modification (ajout, suppression) de données dans une chaîne de blocs.

De manière générale, une chaine de blocs est immuable, i.e. ne peut être modifiée (en dehors d'attaques exceptionnellement difficiles à conduire). Cependant, certains modes de réalisation de l'invention, permettent de considérer des chaînes de blocs « modifiables » ou « éditables » (sous certaines conditions), en anglais « *redactable blockchains ».*

Concernant les données qui sont stockées, i.e. figées dans une chaine de blocs, il n'existe a priori aucun moyen de garantir que ces données d'entrées initiales (ou à un instant quelconque lors de la vie de la chaine de blocs) sont authentiques ou vraies ou sincères ou valides ou intègres. En revanche la généalogie des inscriptions peut être immuable, i.e. non falsifiable du fait de l'emploi d'une chaine de blocs. Avec une chaine de blocs *éditable,* il est avantageux de pouvoir marquer (désigner, pointer) des données qui s'avéreraient fausses ou erronées ou malicieuses ou autrement incorrectes. Les modifications apportées étant traçables, les avantages induits par l'utilisation d'une chaîne de blocs demeurent d'actualité.

Diverses implémentations techniques permettent d'obtenir une chaîne de blocs éditable : chaînage portant sur des identifiants de blocs plutôt que sur leur contenu lequel peut modifiable au moins en partie ; copies ou dérivations d'un chaîne en plusieurs autres (« *sidechains* ») ; utilisation de bases de données secondaires librement modifiables associées à une chaine de bloc primaire ; utilisation de collisions de valeurs de hachage (substitution d'un bloc à valeur de hash donnée par un autre bloc avec la même valeur de hash mais comportant un continu modifié ou différent ; etc. Quelques-unes de ces implémentations sont décrites ci-après.

Dans un mode de réalisation, la gestion de la durée de vie des données peut utiliser une fonction de hachage de données *particulière,* permettant la modification ou suppression d'information sur une chaine de bloc. Par exemple, il peut être utilisé une fonction de hachage dite «Caméléon», ou bien en anglais « *Chameleon hash Function* ». Ces fonctions permettent de trouver des collisions lorsqu'une « *trapdoor* » est connue. En cryptologie, une fonction à trappe (ou « *trapdoor* » en anglais) est en première approche une fonction qu'il est facile d'évaluer en chaque point de son domaine, mais qu'il est difficile d'inverser à moins de disposer d'une information particulière, appelée « trappe ». Ainsi, cela permet d'obtenir le même résultat de *hachage* en sortie alors que les données en entrée ne sont pas les mêmes. Dans un mode de réalisation, seuls certains acteurs du réseau de la chaine de blocs peuvent avoir connaissance de ces « *trapdoors* »; ainsi, ils peuvent modifier le contenu de certains blocs (i.e. modification ou suppression des données contenues dans ces transactions). Profitant de ces *«trapdoors»,* ils peuvent recalculer les données nécessaires (salage, message, données, etc) pour produire un hachage identique et ainsi conserver l'intégrité de la chaine de bloc. Par exemple, ces modifications peuvent intervenir à la suite d'une demande faite par un acteur de la chaine de blocs. Cet acteur peut par exemple être l'émetteur des données concernées par la demande de modification. Dans un mode de réalisation illustré à la figure 3, le chainage entre blocs porte sur les identifiants de blocs, plutôt que sur le contenu des blocs. Ce faisant, il est possible de gérer la durée de vie des données en utilisant la fonction de hachage des blocs (qui permet de maintenir le lien entre les différents blocs de la blockchain) sur les ID (identifiants) de la transaction au lieu de la transaction en elle-même.

Dans une chaine de blocs classique, le lien entre les blocs est assuré par l'ajout du hash du précédent bloc dans le nouveau bloc. Une modification du contenu d'un bloc entrainerait la modification de la valeur de hash de ce bloc, et donc casserait la cohérence des valeurs de hash pour les futurs blocs. Pour éviter cela, tout en permettant la modification des données de certains blocs, un mode de réalisation de l'invention prévoit d'utiliser la fonction de hachage on peut envisager dans un mode de réalisation l'utilisation de la fonction de hachage sur l'ID de ce bloc, et non pas sur le contenu du bloc (transaction). Ainsi, une modification du contenu du bloc n'entraine pas la modification du hash de l'ID de cette transaction, permettant à la blockchain de conserver sa cohérence tout en permettant sa modification.

Dans une variante de réalisation, cette modification peut n'être autorisée qu'à une liste prédéfinie d'acteurs possédant les droits pour réaliser ces modifications. Ce mode particulier de réalisation peut être avantageux dans ou pour une chaine de blocs privée (i.e. ne nécessitant pas nécessairement de validation par preuve de travail).

Selon le mode de réalisation décrit précédemment, il est ainsi possible de considérer la suppression d'un bloc entier de la chaine. Dans l'exemple qui est illustré à la figure 3, la suppression du bloc 302 ne rompt pas le lien entre les blocs 301 et 302, car la valeur de hash de l'ID 311 du bloc 301 se retrouve à la valeur de hash 313 qui est celle du bloc précédent le bloc 303. En d'autres termes, le découplage entre ID et données permet de supprimer un bloc complet. Dans certains modes de réalisation, la taille des blocs peut être prédéfinie et constante; dans d'autres modes de réalisation, la taille des blocs peut être dynamique. Dans tous les cas, la taille d'un bloc peut être configurée (depuis quelques octets jusqu'à des téraoctets), ce qui fait que la granularité des données manipulées peut être ajustée aux besoins.

Dans un autre mode de réalisation, le chiffrement selon l'invention peut utiliser trois clefs distinctes pour déchiffrer des données chiffrées. Parmi ces trois clefs, une clef est persistante : sa suppression empêche le déchiffrement des données, ce qui est équivalent à une suppression des données. Un exemple de mode de réalisation est décrit ci-après. A la création d'un bloc, les données sont chiffrées en utilisant un algorithme spécifique qui requiert trois clefs. Chaque clef est fournie à un acteur spécifique (par exemple en fonction de leur implication et rôles dans cette blockchain. La dérivation de ces trois clés permet de générer la clé de déchiffrement des données.

Dans un mode de réalisation, la clef persistante peut être détenue ou possédée ou contrôlée par un tiers de confiance (e.g. institution, notaire, etc). Lorsqu'un acteur participant à la chaîne de blocs selon l'invention souhaite supprimer ses données (ou qu'un évènement de suppression de la donnée intervient comme décrit auparavant, e.g. déclenchement par oracle, selon une condition temporelle etc), la clef persistante peut être supprimée par l'acteur qui la possède (dans l'exemple un tiers de confiance) rendant le déchiffrement des données impossible.

Dans d'autres modes de réalisation optionnels, il peut être avantageux de conserver des traces des modifications apportées à des données ou des blocs dans les chaines de blocs utilisés. Divers mécanismes peuvent être envisagés.

Dans un mode de réalisation, une seconde fonction de hachage impossible à éditer peut permettre d'identifier un ou plusieurs blocs dans lesquels des modifications ont été apportées. Dans un mode de réalisation, lorsqu'une modification est faite dans une chaine de blocs, elle peut être enregistrée dans cette même chaine ou une autre chaine (*« sidechain »*)*.*

Dans un mode de réalisation, et plus généralement, à l'image de la chaine de blocs découplant identifiant de bloc et son contenu décrite précédemment, une chaine de blocs peut distinguer des types de transactions différentes. Un type de transaction peut notamment être de type *modifiable* (e.g. supprimable, etc selon les exemples précédents). Dans certains modes de réalisation, des copies de chaines de blocs sont gérées (par exemple, une chaine de blocs immuable est conservée, tandis qu'une ou plusieurs versions de chaines de blocs modifiées sont conservées (historicisation des *forks).* Dans certains modes de réalisation, les modifications peuvent être enregistrées dans une chaine de blocs classique (immuable), laquelle surveillerait de manière sûre tous les changements apportés. Dans un mode de réalisation, un bloc (ou chaque bloc) peut contenir un historique des modifications lui ayant été apportées. Cet historique peut être lui-même immuable, i.e. sécurisé. Par exemple, seuls les ajouts peuvent être autorisés (pas de suppression/modification).

Il est décrit un procédé mis en œuvre par ordinateur pour la gestion du cycle de vie de données aéronautiques stockées dans une chaine de blocs, dite primaire, comprenant les étapes consistant à : recevoir des données aéronautiques depuis un producteur de données ; coder les données reçues par un contrat intelligent dit primaire; et stocker les données encodées dans la chaine de blocs primaire. Dans un développement, le procédé comprend les étapes préalables ou ultérieures consistant à recevoir une demande d'accès à des données aéronautiques stockées dans ladite chaine de blocs primaire depuis un consommateur de données ; déterminer la réponse à la demande d'accès par ledit consommateur de données en exécutant le contrat intelligent primaire ; le cas échéant décoder les données. Dans un développement, le codage, respectivement le décodage, par le programme ou contrat intelligent, comprend une étape de chiffrement, respectivement de déchiffrement.

### Mise en œuvre logicielle et/ou matérielle

La présente invention peut s'implémenter à partir d'éléments matériels et/ou logiciels. Elle peut être disponible en tant que produit programme d'ordinateur sur un support lisible par ordinateur. L'ordinateur peut être un rack ou une tablette ou un EFB (sac de vol électronique) ou une partie logicielle intégrée dans le FMS (système de gestion de vol), etc. Le support peut être électronique, magnétique, optique, ou électromagnétique.

Matériellement, les modes de réalisation de l'invention peuvent être réalisés par ordinateur. Par exemple, une architecture distribuée du type « informatique dans les nuages » (« *cloud computing* » en anglais). Des serveurs en pair-à-pair, entièrement ou partiellement distribués (existences de centres) peuvent interagir. Une chaîne de blocs repose sur une architecture décentralisée, qui peut être plus ou moins distribuée. Une mise en œuvre par chaîne de blocs ne fait pas obstacle à l'existence d'une ou de plusieurs nœuds privilégiés, quand il s'agit de cloud privé ou de chaîne de blocs privée. Les accès peuvent être multiplateformes (e.g. depuis EFB, WebApp, accès sol, etc).

Dans un mode de réalisation, un aéronef est équipé d'un module de communication et de partage collaboratif de données issues des calculateurs embarqués dans l'aéronef. Ce module matériel peut être en relation avec divers utilisateurs (consommateurs) et/ou fournisseurs (producteurs) de données. Les équipements avioniques peuvent interagir (communication bilatérale) avec des équipements non-avioniques. Dans certains cas, les communications peuvent être unilatérales (depuis l'avionique vers le nonavionique, mais pas l'inverse, i.e. pour éviter l'injection de données erronées ou malicieuses du monde ouvert vers le monder avionique certifié). Des systèmes de gestion de vol FMS peuvent être mis en réseau entre eux, également avec des EFB.

## Revendications

1. Procédé mis en œuvre par ordinateur pour la gestion du cycle de vie de données aéronautiques (220) stockées dans une chaine de blocs (210), dite primaire, comprenant les étapes consistant à :
- recevoir des données aéronautiques depuis un producteur de données (201) ;
- chiffrer (250) les données reçues par un contrat intelligent (240) dit primaire ; et
- stocker les données chiffrées dans la chaine de blocs (210) primaire.

2. Procédé selon la revendication 1, comprenant les étapes consistant à :
- recevoir une demande d'accès à des données aéronautiques (220) stockées dans ladite chaine de blocs primaire (210) depuis un consommateur de données (202);
- déterminer la réponse à la demande d'accès par ledit consommateur de données en exécutant le contrat intelligent (240) primaire ;
- le cas échéant, déchiffrer (250) les données.

3. Procédé selon l'une quelconque des revendications précédentes, le contrat intelligent (240) comprenant un ou plusieurs programmes d'ordinateur contrôlant la gestion du cycle de vie des données (241).

4. Procédé selon la revendication 3, ladite gestion du cycle de vie des données (241) étant déterminée par la mise en œuvre de règles logiques, lesdites règles logiques comprenant des règles relatives à la production, respectivement à la consommation, et/ou au chiffrement, respectivement au déchiffrement des données, ou à l'utilisation valide des données.

5. Procédé selon la revendication 4, les règles logiques manipulant des paramètres temporels relatifs à une ou plusieurs données, les paramètres temporels comprenant une date de début de validité et/ou une date de fin de validité, un intervalle temporel de validité, une obsolescence binaire ou quantifiée en fonction du temps et/ou des paramètres de qualité.

6. Procédé selon la revendication 3, le contrat intelligent primaire comprenant un ou plusieurs contrats intelligents stockés et exécutés sur la chaine de blocs primaire.

7. Procédé selon l'une quelconque des revendications précédentes, le contrat intelligent primaire étant stocké et exécuté sur une chaine de blocs secondaire, indépendante de la chaine de blocs primaire.

8. Procédé selon l'une quelconque des revendications précédentes, le chiffrement étant un chiffrement asymétrique, utilisant une paire de clefs privée et publique, le procédé comprenant en outre une étape de suppression de la clef privée permettant l'accès aux données.

9. Procédé selon la revendication 3, comprenant en outre une étape de suppression d'une ou de plusieurs données et/ou règles de gestion du cycle de vie (241)

10. Procédé selon la revendication 9, l'étape de suppression d'une ou de plusieurs données étant déterminée par la manipulation de paramètres temporels de validité associés auxdites données.

11. Procédé selon la revendication 9 ou la revendication 10, l'étape de suppression étant déclenchée en fonction de données internes à la chaine de blocs primaire.

12. Procédé selon la revendication 9 ou la revendication 10, l'étape de suppression étant déclenchée en fonction de données reçues depuis un ou plusieurs oracles ou services d'oracle (211).

13. Procédé selon l'une quelconque des revendications précédentes, le chiffrement utilisant la distribution quantique de clefs et/ou comprenant du chiffrement homomorphe et/ou du chiffrement post-quantum.

14. Procédé selon l'une quelconque des revendications précédentes, le chiffrement utilisant trois clefs, dont une clef est de type persistant, ladite clef persistante étant détenue par un tiers de confiance et dont la destruction empêche le déchiffrement des données chiffrées à l'aide de cette clef.

15. Procédé selon l'une quelconque des revendications précédentes, le programme intelligent réalisant des transactions financières en fonction des étapes de chiffrement et/ou de déchiffrement des données aéronautiques.

16. Procédé selon l'une quelconque des revendications précédentes, une chaine de blocs étant une chaine de blocs au moins partiellement modifiable ou éditable.

17. Procédé selon la revendication 16, une fonction de hachage utilisée étant une fonction de hachage de type caméléon.

18. Procédé selon la revendication 16, dans lequel un bloc de la chaine de bloc comprend un identifiant de bloc et un contenu de bloc, lesdits identifiants étant chainés.

19. Procédé selon l'une quelconque des revendications précédentes, comprenant en outre une ou plusieurs étapes d'apprentissage automatique.

20. Produit programme d'ordinateur, ledit programme d'ordinateur comprenant des instructions de code permettant d'effectuer les étapes du procédé selon l'une quelconque des revendications 1 à 19, lorsque ledit programme est exécuté sur un ordinateur.

21. Système pour la gestion du cycle de vie de données aéronautiques comprenant des ressources de calcul, de stockage et de réseau pour la mise en œuvre des étapes du procédé selon l'une quelconque des revendications 1 à 19.

22. Système selon la revendication 21, un producteur de données étant un aéronef et un consommateur de données étant un autre aéronef.

23. Système selon la revendication 21, comprenant en outre un ou plusieurs réseaux de neurones configurés pour l'apprentissage automatique, lesdits un ou plusieurs réseaux de neurones étant choisis parmi les réseaux de neurones comprenant :
- un réseau de neurones artificiels ;
- un réseau de neurones artificiels acyclique ;
- un réseau de neurones récurrents ;
- un réseau de neurones à propagation avant ;
- un réseau neuronal convolutif;
- un réseau de neurones antagonistes génératifs ;
- lesdits un ou plusieurs réseaux de neurones étant émulés de manière logicielle et/ou étant des circuits physiques dont les entrées et les sorties sont contrôlables par une pluralité de chaînes de blocs et/ou par un ou plusieurs contrats intelligents.

## Patentansprüche

1. Computer-implementiertes Verfahren für das Lebenszyklusmanagement von Luftfahrtdaten (220), die in einer primär genannten Blockchain (210) gespeichert sind, das die folgenden Schritte umfasst:
- Empfangen von Luftfahrtdaten von einem Datenproduzenten (201);
- Verschlüsseln (250) der empfangenen Daten durch ein primär genanntes Smart Contract (240); und
- Speichern der verschlüsselten Daten in der primären Blockchain (210).

2. Verfahren nach Anspruch 1, das die folgenden Schritte umfasst:
- Empfangen einer Anforderung für Zugang zu Luftfahrtdaten (220), die in der primären Blockchain (210) gespeichert sind, von einem Datenverbraucher (202);
- Bestimmen der Antwort auf die Zugangsanforderung des Datenverbrauchers durch Ausführen des primären Smart Contract (240);
- gegebenenfalls Entschlüsseln (250) der Daten.

3. Verfahren nach einem der vorherigen Ansprüche, wobei der Smart Contract (240) ein oder mehrere Computerprogramme umfasst, die das Lebenszyklusmanagement (241) der Daten steuern.

4. Verfahren nach Anspruch 3, wobei das Lebenszyklusmanagement (241) der Daten durch Anwenden von logischen Regeln bestimmt wird, wobei die logischen Regeln Regeln in Bezug auf die Erzeugung beziehungsweise den Verbrauch und/oder die Verschlüsselung beziehungsweise Entschlüsselung von Daten oder die gültige Verwendung von Daten umfassen.

5. Verfahren nach Anspruch 4, wobei die logischen Regeln Zeitparameter in Bezug auf ein oder mehrere Daten behandeln, wobei die Zeitparameter ein Gültigkeitsstart-und/oder -enddatum, ein Gültigkeitszeitintervall, eine binäre oder quantifizierte Veralterung in Abhängigkeit von der Zeit und/oder von Qualitätsparametern umfassen.

6. Verfahren nach Anspruch 3, wobei der primäre Smart Contract einen oder mehrere Smart Contracts umfasst, die auf der primären Blockchain gespeichert und ausgeführt werden.

7. Verfahren nach einem der vorherigen Ansprüche, wobei der primäre Smart Contract auf einer von der primären Blockchain unabhängigen sekundären Blockchain gespeichert und ausgeführt wird.

8. Verfahren nach einem der vorherigen Ansprüche, wobei die Verschlüsselung eine asymmetrische Verschlüsselung ist, die ein privates und öffentliches Schlüsselpaar verwendet, wobei das Verfahren ferner einen Schritt des Löschens des privaten Schlüssels umfasst, der den Zugriff auf die Daten zulässt.

9. Verfahren nach Anspruch 3, das ferner einen Schritt des Löschens eines oder mehrerer Datenelemente und/oder Lebenszyklusmanagementregeln (241) umfasst.

10. Verfahren nach Anspruch 9, wobei der Schritt des Löschens eines oder mehrerer Datenelemente durch Manipulieren von mit den Daten assoziierten Gültigkeitszeitparametern bestimmt wird.

11. Verfahren nach Anspruch 9 oder Anspruch 10, wobei der Schritt des Löschens in Abhängigkeit von Daten innerhalb der primären Blockchain ausgelöst wird.

12. Verfahren nach Anspruch 9 oder Anspruch 10, wobei der Schritt des Löschens in Abhängigkeit von von einem oder mehreren Oracles oder Oracle-Diensten (211) empfangenen Daten ausgelöst wird.

13. Verfahren nach einem der vorherigen Ansprüche, wobei die Verschlüsselung eine Quantenschlüsselverteilung verwendet und/oder eine homomorphe Verschlüsselung und/oder eine Post-Quantum-Verschlüsselung umfasst.

14. Verfahren nach einem der vorherigen Ansprüche, wobei die Verschlüsselung mit drei Schlüsseln erfolgt, von denen einer vom persistenten Typ ist, wobei der persistente Schlüssel von einer vertrauenswürdigen Drittpartei gehalten wird und seine Zerstörung das Entschlüsseln der mittels dieses Schlüssels verschlüsselten Daten verhindert.

15. Verfahren nach einem der vorherigen Ansprüche, wobei das intelligente Programm Finanztransaktionen in Abhängigkeit von den Schritten des Verschlüsselns und/oder Entschlüsselns der Luftfahrtdaten durchführt.

16. Verfahren nach einem der vorherigen Ansprüche, wobei eine Blockchain eine mindestens teilweise modifizierbare oder editierbare Blockchain ist.

17. Verfahren nach Anspruch 16, wobei eine benutzte Hash-Funktion eine Cameleon-Hash-Funktion ist.

18. Verfahren nach Anspruch 16, wobei ein Block der Blockchain eine Blockkennung und einen Blockinhalt umfasst, wobei die Kennungen verkettet sind.

19. Verfahren nach einem der vorherigen Ansprüche, das ferner einen oder mehrere maschinelle Lernschritte beinhaltet.

20. Computerprogrammprodukt, wobei das Computerprogramm Codebefehle umfasst, die die Durchführung der Schritte des Verfahrens nach einem der Ansprüche 1 bis 19 zulassen, wenn das Programm auf einem Computer ausgeführt wird.

21. System für das Lebenszyklusmanagement von Luftfahrtdaten, das Rechen-, Speicher- und Netzwerkressourcen für die Durchführung der Schritte des Verfahrens nach einem der Ansprüche 1 bis 19 umfasst.

22. System nach Anspruch 21, wobei ein Datenproduzent ein Flugzeug und ein Datenverbraucher ein anderes Flugzeug ist.

23. System nach Anspruch 21, das ferner ein oder mehrere neuronale Netze umfasst, die für maschinelles Lernen konfiguriert sind, wobei die ein oder mehreren neuronalen Netze aus neuronalen Netzen ausgewählt sind, die Folgendes umfassen:
- ein künstliches neuronales Netz;
- ein azyklisches künstliches neuronales Netz;
- ein rekurrentes neuronales Netz;
- ein vorwärts propagierendes neuronales Netz;
- ein Faltungsneuronennetz;
- ein Netz von generativen antagonistischen Neuronen;
- wobei die ein oder mehreren neuronalen Netze Software-emuliert und/oder physikalische Schaltkreise sind, deren Ein- und Ausgänge durch eine Mehrzahl von Blockchains und/oder durch ein oder mehrere Smart Contracts steuerbar sind.

## Claims

1. A computer-implemented method for managing the lifecycle of aeronautical data (220) stored in a blockchain (210), called primary blockchain, comprising the steps of:
- receiving aeronautical data from a data producer (201);
- encrypting (250) the received data using a smart contract (240), called primary smart contract; and
- storing the encrypted data in the primary blockchain (210).

2. The method according to claim 1, comprising the steps of:
- receiving a request to access aeronautical data (220), stored in said primary blockchain (210), from a data consumer (202);
- determining the response to the access request made by said data consumer by executing the primary smart contract (240);
- where appropriate, decrypting (250) the data.

3. The method according to either one of the preceding claims, the smart contract (240) comprising one or more computer programs that control the management of the lifecycle of the data (241).

4. The method according to claim 3, said management of the lifecycle of the data (241) being undertaken by implementing logical rules, said logical rules comprising rules relating to the production, respectively to the consumption, and/or to the encryption, respectively to the decryption, of the data or to the valid use of the data.

5. The method according to claim 4, the logical rules manipulating time parameters relating to one or more data, the time parameters comprising a start date of validity and/or an end date of validity, a time interval of validity, a quantified or binary obsolescence dependent on time and/or quality parameters.

6. The method according to claim 3, the primary smart contract comprising one or more smart contracts stored and executed in the primary blockchain.

7. The method according to any one of the preceding claims, the primary smart contract being stored and executed in a secondary blockchain, independent of the primary blockchain.

8. The method according to any one of the preceding claims, the encryption being an asymmetric encryption using a pair of private and public keys, the method further comprising a step of deleting the private key allowing access to the data.

9. The method according to claim 3, further comprising a step of deleting one or more datum and/or lifecycle-management rule (241).

10. The method according to claim 9, the step of deleting one or more datum being undertaken by manipulating time parameters of validity associated with said data.

11. The method according to claim 9 or claim 10, the deleting step being triggered depending on data internal to the primary blockchain.

12. The method according to claim 9 or claim 10, the deleting step being triggered depending on data received from one or more oracles or oracle services (211).

13. The method according to any one of the preceding claims, the encryption employing quantum key distribution and/or comprising homomorphic encryption and/or post-quantum encryption.

14. The method according to any one of the preceding claims, the encryption using three keys, one key of which is of persistent type, said persistent key being held by a trusted third party and the destruction thereof preventing the data encrypted using this key from being decrypted.

15. The method according to any one of the preceding claims, the smart program performing financial transactions depending on the steps of encrypting and/or decrypting the aeronautical data.

16. The method according to any one of the preceding claims, a blockchain being an at least partially modifiable or redactable blockchain.

17. The method according to claim 16, a hash function used being a chameleon hash function.

18. The method according to claim 16, wherein each block of the blockchain comprises a block identifier and a block content, said identifiers being chained.

19. The method according to any one of the preceding claims, further comprising one or more machine-learning steps.

20. A computer-program product, said computer program containing code instructions allowing the steps of the method according to any one of claims 1 to 19 to be carried out when said program is executed on a computer.

21. A system for managing the lifecycle of aeronautical data comprising resources for computing, storing and networking with a view to implementing the steps of the method according to any one of Claims 1 to 19.

22. The system according to claim 21, a data producer being an aircraft and a data consumer being another aircraft.

23. The system according to claim 21, further comprising one or more neural networks configured for machine learning, said one or more neural networks being chosen from neural networks comprising:
- an artificial neural network;
- an acyclic artificial neural network;
- a recurrent neural network;
- a feed-forward neural network;
- a convolutional neural network;
- a generative adversarial neural network;
- said one or more neural networks being emulated with software and/or being physical circuits the inputs and outputs of which are controllable by a plurality of blockchains and/or by one or more smart contracts.
